## Europäisches Patentamt
## European Patent Office
## Office européen des brevets

(19)

(11) Veröffentlichungsnummer: **0 264 647**
**A1**

(12) **EUROPÄISCHE PATENTANMELDUNG**

(21) Anmeldenummer: 87113849.1

(22) Anmeldetag: 22.09.87

(51) Int. Cl.⁴: **B01D 53/36**

(30) Priorität: 30.09.86 DE 3633285

(43) Veröffentlichungstag der Anmeldung:
27.04.88 Patentblatt 88/17

(84) Benannte Vertragsstaaten:
AT BE CH DE ES FR GB GR IT LI LU NL SE

(71) Anmelder: Siemens Aktiengesellschaft Berlin und München
Wittelsbacherplatz 2
D-8000 München 2(DE)

(72) Erfinder: Hums, Erich, Dr.
Aschaffenburger Strasse 16
D-8520 Erlangen(DE)

(54) Verbrennungsanlage mit einer Einrichtung zur Minderung der Stickoxide in Rauchgasen.

(57) Die Erfindung bezieht sich auf eine Einrichtung zur Minderung der Stickoxide in Rauchgasen mit einer Eindüsvorrichtung für gasförmige Reduktionsmittel und einer der Eindüsvorrichtung nachgeschalteten Katalysatoranordnung. Hierbei besteht das Problem, den - wenn auch geringen - Schlupf von Stickoxiden durch die Katalysatoren noch weiter herunterzudrücken, ohne andere nachteilige Gasverunreinigung in Kauf nehmen zu müssen. Hierzu sieht die Erfindung vor, einen Elemente der Eisen-Gruppe enthaltenden Katalysator (16,39) in einem Temperaturbereich von über 600 °C zu verwenden. Des weiteren kann der Katalysator aus einer Metallegierung bestehen. Eine erfindungsgemäße Anlage ist insbesondere für den Einsatz in industriellen Verbrennungsanlagen geeignet.

FIG 1

EP 0 264 647 A1

**Verbrennungsanlage mit einer Einrichtung zur Minderung der Stickoxide in Rauchgasen**

Die Erfindung bezieht sich auf eine Verbrennungsanlage mit einer Einrichtung zur Minderung der Stickoxide in Rauchgasen, mit einer Eindüsvorrichtung für gasförmige Reduktionsmittel und einer der Eindüsvorrichtung nachgeschalteten Katalysatoranordnung.

Es sind bereits Verbrennungsanlagen bekannt, bei denen Ammoniak in die Rauchgasleitung eingedüst wird und dieses mit Ammoniak angereicherte Rauchgas durch eine Katalysatoranordnung meist auf Basis von titanoxid-und vanadiumoxidhaltigen Katalysatoren, sogenannten SCR-Katalysatoren, geleitet wird.

Bei diesen Verbrennungsanlagen reduzieren die SCR-Katalysatoren die Stickoxide NO und $NO_2$ mit Hilfe des als Reduktionsmittel dienenden Ammoniaks zu $H_2O$ und $N_2$. Dabei lassen sich die Stickoxide in den Rauchgasen mitunter auf Werte drücken, die unter den durch die Emissionsgesetze vorgeschriebenen Grenzwerten liegen. Es ist eine Eigenart solcher Anlagen, daß der technische Aufwand, der für die Minderung der Stickoxide getrieben werden muß, beachtlich ist.

Durch die DE-OS 26 01 077 ist ein Verfahren zur Entfernung der Stickoxide aus Verbrennungsabgasen bekannt, bei dem das Ammoniak an einer Stelle dem Abgas zugeführt wird, an der die Temperatur oberhalb von 700 °C liegt und dort über Metalloberflächen, insbesondere Wärmetauscheroberflächen, geleitet wird, die Vanadiumkomponenten enthalten. Dieses Verfahren zeichnet sich durch einen deutlich verminderten technischen Aufwand aus. Dafür ist aber auch der Grad der Entstickung gegeringer als bei anderen Verfahren zur Minderung der Stickoxide.

Ein Verfahren zur nichtkatalytischen Reduktion der Stickoxide mittels Ammoniak bei einer Wirbelschichtfeuerung ist durch die DE-OS 34 41 141 bekannt. Dort wird auf Katalysatoren verzichtet und wird das Ammoniak der in die Wirbelschicht einströmenden Verbrennungsluft beigemischt. Es ist ein Vorteil dieses Verfahrens, daß es ohne großen Aufwand auch in Altanlagen nachrüstbar ist und daß dabei der zu treibende technische Aufwand relativ gering ist. Diese Art der Minderung der Stickoxide erfordert jedoch eine sorgfältige Kontrolle der Flammentemperatur. Bei zu hoher Flammentemperatur werden durch Zersetzung des Ammoniaks und Oxidation desselben in der Flamme zusätzliche Stickoxide erzeugt. Auch bei Flammentemperaturen um und unter 800 °C läßt der Entstickungsgrad bei diesem Verfahren zu wünschen übrig.

Durch die DRP 641 596 und 666 062 ist ein Verfahren zur Verbrennung von $NH_3$ bekannt geworden, bei dem die Reaktionsführung so gewählt ist, daß ein $O_2$-und stickoxidfreies Gemisch von $N_2$ und $H_2$ erhalten werden kann. Durch Zumischung von Luft kann die Wasserstofferzeugung bei diesem Verfahren in weiten Grenzen gesteuert werden. Hierbei wird ein Eisen-Nickel-Chrom-Katalysator oberhalb von 700 °C eingesetzt.

Der Erfindung liegt die Aufgabe zugrunde, einen Weg zu weisen, wie die Stickoxide in den Rauchgasen von Verbrennungsanlagen auf möglichst einfache Weise soweit wie möglich abgebaut werden können, ohne andere unerwünschte Gasverunreinigung in Kauf nehmen zu müssen.

Diese Aufgabe wird durch die Merkmale des Anspruchs 1 gelöst. Weitere vorteilhafte Ausgestaltungen sind den Ansprüchen 2 bis 21 zu entnehmen.

Infolge der Verwendung eines Elemente der Eisen-Gruppe enthaltenden Katalysators ergibt sich ein Kostenvorsprung bei den Herstellkosten gegenüber den meisten anderen Katalysatorsystemen. Darüber hinaus wird auch ein Material verwendet, das bei der späteren Entsorgung des verbrauchten Katalysators keine Probleme bereitet und darüber hinaus auch wieder aufbereitet werden kann. Beim Einsatz in einen Temperaturbereich von über 600 °C zeigen diese Elemente auch eine gute katalytische Aktivität bei der Umsetzung von Ammoniak und Stickoxiden zu Wasserdampf, Wasserstoff und Stickstoff.

Eine besonders große Unempfindlichkeit des Katalysators gegenüber den abrasiven Einfluß von Staub-und Ascheteilchen läßt sich erreichen, wenn in besonders vorteilhafter Weiterbildung der Erfindung ein aus einer Metallegierung bestehender Katalysator verwendet wird. In diesem Fall ändert sich die katalytische Aktivität nicht, wenn Oberflächenteile des Katalysators abgetragen werden. Die Temperaturempfindlichkeit des Katalysators kann deutlich verbessert werden, wenn in Ausgestaltung der Erfindung der Legierung Chrom beigefügt wird. Hierdurch läßt sich sein Einsatzbereich dergestalt erweitern, daß er unmittelbar in den Brennraum von Kesselanlagen eingesetzt werden kann.

Recht gute katalytische Aktivitäten lassen sich auch erreichen, wenn in einer weiteren erfindungsgemäßen Ausgestaltung ein im wesentlichen aus Nickel bestehender Katalysator verwendet wird.

Weitere Einzelheiten der Erfindung werden anhand zweier in den FIG dargestellter Ausführungsbeispiele erläutert; es zeigen:

FIG 1 eine schematische Darstellung einer Wirbelschichtfeuerungsanlage mit einer Einrichtung zur Minderung der Stickoxide und

FIG 2 eine schematische Darstellung einer anderen Verbrennungsanlage mit einer in der Rauchgasleitung eingebauten Einrichtung zur Minderung der Stickoxide.

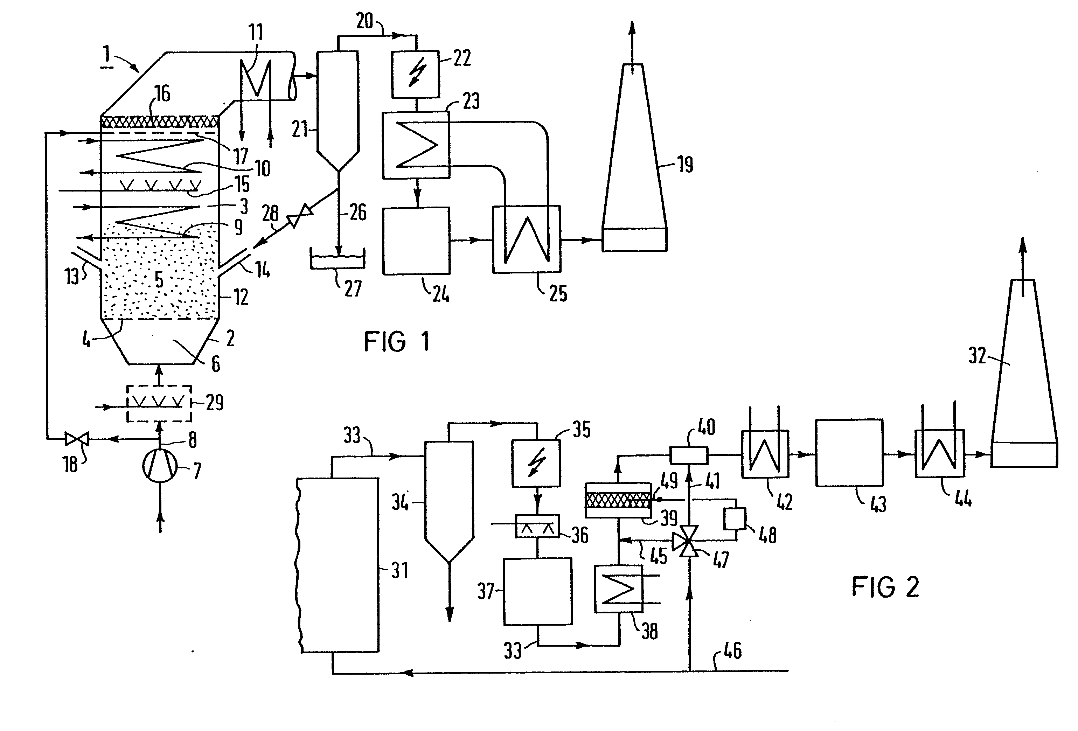

Die FIG 1 zeigt eine Verbrennungsanlage 1 mit einer Wirbelschichtfeuerung. Im Gehäuse 2 des Brennraumes 3 ist ein Düsenboden 4, oberhalb dessen sich eine Wirbelschicht 5 befindet, zu erkennen. In dem darunter befindlichen Raum 6 mündet die von einem Frischluftverdichter 7 gespeiste Verbrennungsluftleitung 8. Oberhalb der Wirbelschicht sind im Brennraum eine Überhitzerheizfläche 9, eine Verdampferheizfläche 10 und eine Economiserheizfläche angedeutet. In der Außenwand 12 des Brennraumes sind in Höhe der Wirbelschicht 5 zwei Brennstoffzuführungsstutzen 13,14 eingelassen. Zwischen der Überhitzerheizfläche 9 und der Verdampferheizfläche 10 ist eine Eindüsvorrichtung 15 für ein Reduktionsmittel, im vorliegenden Fall Amnmoniak, zu erkennen. Oberhalb der Verdampferheizfläche 10 ist ein Katalysator 16 so im Brennraum 3 eingebaut, daß er den gesamten Querschnitt des Brennraumes in gleicher Stärke überdeckt. Zwischen der Verdampferheizfläche 10 und dem Katalysator 16 ist im Brennraum der Verbrennungsanlage 1 eine Eindüsvorrichtung 17 für Frischluft zu erkennen. Sie ist über ein Regelventil 18 an die Verbrennungsluftleitung 8 angeschlossen. In der von der Verbrennungsanlage 1 zum Kamin führenden Rauchgasleitung 20 sind auch nacheinander gasseitig ein Zyklon 21, eine Elektrofilteranlage 22, ein erster Wärmetauscher 23, eine Rauchgasentschwefelungsanlage 24 und ein zweiter Wärmetauscher 25 angeschlossen. Die Ascheaustragsleitung 26 des Zyklons 21 mündet in einen Container 27. Sie ist über eine Rezirkunationsleitung 28 auch an die in die Außenwände des Brennraumes 3 eingelassenen Brennstoffzuführungsstutzen 13,14 angeschlossen. Der Katalysator 16 besteht im Ausführungsbeispiel aus einer Vielzahl von parallel übereinander angeordneten, den gesamten Querschnitt des Brennraumes 3 überdeckenden Metallnetzen aus einer Chrom-Nickel-Stahl-Legierung. Stattdessen könnte auch eine zwischen zwei Siebböden gefangene Schüttung von Metallspänen der entsprechenden Legierung bzw. von Nickelspänen eingesetzt sein.

Beim Betrieb der Verbrennungsanlage 1 wird über den Frischluftverdichter 7 Verbrennungsluft von unten durch den Düsenboden 4 in die Wirbelschicht 5 eingeblasen. Zugleich wird entsprechend dem Umsatz fein gemahlene Kohle über die Brennstoffzuführungsstutzen 13,14 in die Wirbelschicht 5 eingeführt. In an sich bekannter Weise wirbelt die Verbrennungsluft den eingeführten Kohlenstaub auf. Dabei oxidiert bei den herrschenden Temperaturen der bei etwa 800 °C bis 1000 °C liegende Sauerstoff der Luft mit den Brennstoffteilchen. Die dabei entstehende Wärme wird in den verschiedenen Heizflächen 9,10,11 zur Aufheizung von Speisewasser, zur Dampferzeugung und zur Überhitzung des erzeugten Dampfes verwendet.

Das zwischen den Überhitzerheizflächen 9 und den Verdampferheizflächen 10 eingedüste Ammoniak reagiert bei den in diesem Bereich herrschenden Temperaturen von über 800 °C mit den in der Wirbelschicht schon gebildeten Stickoxiden und reduziert diese teilweise zu Stickstoff und Wasserdampf. Diese Reaktion wird beim Passieren des im Brennraum 3 installierten Katalysators 16 an der Oberfläche so sehr verstärkt, daß hinter dem Katalysator praktisch keine Stickoxide mehr im Rauchgas vorhanden sind. Dabei wird der im Rauchgas auch noch enthaltene Sauerstoff - soweit vorhanden - zur Oxidation des bei der Aufspaltung des Ammoniak freiwerdenden Wasserstoffs zu Wasserdampf verbraucht. Diese stark exotherme Reaktion führt zu einer weiteren Aufheizung des Katalysators 16 und der diesen durchströmenden Rauchgase. Die Eindüsung von Luft wird mittels des Regelventils 18 so eingestellt, daß sämtlicher gebildeter Wasserstoff verbrannt wird.

In dem der Verbrennungseinrichtung 1 nachgeschalteten Zyklon werden die Staub-und Ascheteilchen von den Rauchgasen abgetrennt. Diese abgetrennten Staub-und Ascheteile werden teilweise über die Rezirkulationsleitung 28 in den Brennraum 3 und zu einem anderen kleineren Teil in den Container 27 geleitet. Infolge der teilweisen Rezirkulation kann die durchschnittliche Verweilzeit für die Brennstoffpartikel in der Wirbelschicht erhöht und dadurch deren Ausbrannt verbessert werden. In dem dem Zyklon 21 nachgeschalteten Elektrofilter 22 werden die verbleibenden restlichen Staubpartikel zurückgehalten. In dem nachgeschalteten ersten Wärmetauscher werden die der Rauchgasentschwefelungsanlage 24 zuströmenden Rauchgase auf ca. 150 °C abgekühlt. In der Rauchgasentschwefelungsanlage 24 werden die Rauchgase in bekannter Weise von - schwefelhaltigen Bestandteilen befreit. Hinter der Rauchgasentschwefelungsanlage werden die die Rauchgasentschwefelungsanlage mit ca. 65 °C verlassenden gereinigten Rauchgase vor der Einleitung in den Kamin 19 im zweiten Wärmetauscher mittels der im ersten Wärmetauscher 23 zurückgewonnenen Wärme wieder auf eine Temperatur von ca. 100 °C bis 120 °C aufgeheizt. Diese Aufheizung ist erforderlich, um im Kamin 19 den nötigen Sog aufrechtzuerhalten.

Es ist ein besonderer Vorteil dieser Bauweise einer Verbrennungsanlage, daß eine separate voluminöse Rauchgasentstickungsanlage in der Rauchgasleitung eingespart wird. Stattdessen ist lediglich eine Katalysatorebene, eine Ammoniakeindüsvorrichtung 15 und eine Lufteindüsvorrichtung 17 in dem Brennraum 3 der Verbrennungsanlage 1 vorzusehen. Durch den Katalysator 16 werden bei den herrschenden hohen Temperaturen von 800 °C bis 1300 °C die Stickoxide mit dem eingedüsten Ammoniak als Reduktionsmittel zu Stickstoff und Wasser reduziert. Außerdem wird der überschüssige Ammoniakanteil an den Oberflächen des Katalysators in Stickstoff und Wasserstoff aufgespalten und je nach Sauerstoffüberschuß das bei der Ammoniakaufspaltung erzeugte Wasserstoffgas zu Wasserdampf oxidiert. Dabei sorgt die zusätzliche Eindüsung von Frischluft dafür, daß ausreichend Sauerstoff vorhanden ist, um den gesamten gebildeten Wasserstoff zu Wasserdampf zu oxidieren und zugleich am Katalysator 16 so viel Wärme freizusetzen, daß dessen Oberflächentemperatur nicht unter 800 °C sinken kann.

Als Variante zum Ausführungsbeispiel der FIG 1 wäre es noch denkbar, die Eindüsvorrichtung 29 für das Reduktionsmittel nicht in der Brennkammer 3, sondern in die zur Brennkammer führende Verbrennungsluftleitung 8 einzubauen, so wie das gestrichelt in der FIG 1 angedeutet ist. In diesem letztgenannten Fall gelangt das eingedüste Ammoniak mit der Verbrennungsluft über den Düsenboden 4 in die Wirbelschicht 5. Diese Variante desAusführungsbeispiels der FIG 1 hat den Vorteil, daß die Nachrüstung bei bestehenden Kraftwerksanlagen relativ einfach durchführbar ist. Dafür ist jedoch hier darauf zu achten, daß in der Wirbelschicht 5 nirgendwo die für die Aufspaltung und Oxidierung des Stickstoffs erforderlichen 800 °C erreicht oder gar überschritten werden, denn wenn dies geschieht, erfolgt statt der Absenkung eine Zunahme der Stickoxide im Rauchgas.

Die FIG 2 zeigt eine andere Ausführungsform der Einrichtung zur Minderung der Stickoxide, die an eine beliebige Verbrennungsanlage 31 anschließbar ist. Die Verbrennungsanlage ist in diesem Ausführungsbeispiel daher nur schematisch angedeu tet. In der die Verbrennungsanlage 31 verlassenden und zum Kamin 32 führenden Rauchgasleitung sind in Strömungsrichtung der Rauchgase in Serie ein Zyklon 34, ein Elektrofilter 35, eine Ammoniakeindüsvorrichtung 36, ein Denox-Katalysator 37, ein erster Wärmetauscher 38, ein erfindungsgemäßer Eisen-Nickel-Katalysator 39, eine Brennkammer 40 mit einer Verbrennungsluftleitung 41, ein zweiter Wärmetauscher 42, eine Rauchgasentschwefelungsanlage 43 und ein dritter Wärmetauscher 44 gechaltet. Zwischen dem ersten Wärmetauscher 38 und dem Eisen-Nickel-Katalysator 39 ist die Rauchgasleitung 33 mit einem Anschluß 45 an die zur Verbrennungsanlage 31 führende Verbrennungsluftleitung 46 versehen. In diesen Anschluß 45 ist ein Regelventil geschaltet, das über einen Meßverstärker gesteuert wird, der seine Steuersignale von einem im Eisen-Nickel-Katalysator 39 eingebauten Temperaturfühler 39 erhält.

Beim Betrieb dieser Verbrennungsanlage 31, die auch eine Schmelzkammerfeuerungsanlage sein kann, strömen die stickoxidhaltigen Rauchgase über den Zyklon 34 und den Elektrofilter 35, in denen sie von Staubteilchen befreit werden, in die Ammoniakeindüsvorrichtung 36 ein. In dieser Ammoniakeindüsvorrichtung wird den Rauchgasen vor der Einleitung in einen titanoxid-und/oder vanadiumoxidhaltigen Katalysator 37 Ammoniak zugemischt. In dem Denox-Katalysator 37 werden die Stickoxide mit dem Ammoniak in Wasserdampf und Stickstoff umgewandelt. Die weitgehend, aber nicht vollständig entstickten Rauchgase, werden in einem dem Denox-Katalysator 37 nachgeschalteten ersten Wärmetauscher auf über 700 °C aufgeheizt und über den Anschluß 45 an die Verbrennungsluftleitung 46 mit Luftsauerstoff angereichert, bevor sie in den Eisen-Nickel-Katalysator 39 eingeleitet werden. Dieser Eisen-Nickel-Katalysator ist ebenso aufgebaut, wie das anhand des Ausführungsbeispiels 1 beschrieben worden ist. In diesem Eisen-Nickel-Katalysator werden die Stickoxide unter Aufspaltung des Ammoniaks reduziert und der bei der Aufspaltung des Ammoniaks freiwerdende überschüssige Wasserstoff mit dem Luftsauerstoff zu Wasser oxidiert. Die dabei freiwerdende Wärme heizt den Eisen-Nickel-Katalysator auf. Um eine Überhitzung des Eisen-Nickel-Katalysators 39 zu vermeiden, steuert der Temperaturmeßfühler bei Erreichen einer oberen Temperatur grenze über den nachgeschalteten Meßverstärker 48 das im Anschluß 45 an die Verbrennungsluftleitung 46 befindliche Regelventil 47 im Sinne einer Querschnittsverkleinerung. Konnte wegen Überhitzung des Katalysators nicht genügend Verbrennungsluft zugegeben werden, um den gesamten bei der Aufspaltung des Ammoniaks freiwerdenden Wasserstoff zu oxidieren, so wird die fehlende Luftmenge über die Verbrennungsluftleitung 41 in der dem Katalysator nachgeschalteten Brennkammer zugeführt. Dies geschieht am besten dadurch, daß das Regelventil 47 ein Dreiwegeventil ist, von dem der eine Abzweig an den Anschluß 45 und der andere Abzweig an die Verbrennungsluftleitung 41 angeschlossen ist.

Bei den am Ausgang des Katalysators herrschenden Temperaturen von über 700 °C verbrennt die in der Brennkammer 40 eingeleitete Luft sofort mit dem Restwasserstoff und heizt die Rauchgase auf. Diese heißen Rauchgase werden im nachgeschalteten Dampferzeuger auf ca. 150 °C abgekühlt, bevor sie in die Rauchgasentschwefelungsanlage 43 einströmen. Die der Rauchgasentschwefelungsanlage entströmenden gereinigten, nunmehr ca. 65 °C warmen Rauchgase werden in dem nachgeschalteten Wärmetauscher mit dem Dampf des zweiten Dampferzeugers auf ca. 120 °C aufgeheizt, bevor sie in den Kamin gelangen. Es ist ein großer Vorteil dieser Einrichtung zur Minderung der Stickoxide, daß die sonst bei herkömmlichen DenoxKatalysatoren als unvermeidlicher Schlupf mit den gereinigten Rauchgasen in die Atmosphäre entströmenden Stickoxide und Ammoniakanteile in dem nachgeschalteten erfindungsgemäßen Eisen-Nickel-Katalysator nahezu restlos abgebaut werden können. Der Entstickungsgrad läßt sich somit deutlich verbessern und der Ammoniakschlupf noch weiter verringern.

## Ansprüche

1. Verbrennungsanlage mit einer Einrichtung zur Minderung der Stickoxide in den Rauchgasen mit einer Eindüsvorrichtung für gasförmige Reduktionsmittel und einer der Eindüsvorrichtung nachgeschalteten Katalysatoranordnung, **dadurch gekennzeichnet,** daß ein Elemente der Eisen-Gruppe enthaltender Katalysator (16,39) einer Rauchgastemperatur über 600 ° C ausgesetzt ist.

2. Verbrennungsanlage nach Anspruch 1, **gekennzeichnet** durch einen aus einer Metalllegierung bestehenden Katalysator (16,39).

3. Verbrennungsanlage nach Anspruch 2, **dadurch gekennzeichnet,** daß der Legierung Chrom beigefügt ist.

4. Verbrennungsanlage nach Anspruch 1, **gekennzeichnet** durch einen im wesentlichen aus Nickel bestehenden Katalysator.

5. Verbrennungsanlage nach Anspruch 2 oder 4, **dadurch gekennzeichnet,** daß das Katalysatormaterial (16,39) in Form von Drähten oder Spänen oder Netzwerken vorliegt.

6. Verbrennungsanlage nach Anspruch 1, **gekennzeichnet** durch einen Oxide der Metalle Eisen und/oder Nickel und/oder Chrom enthaltenden Katalysator.

7. Verbrennungsanlage nach Anspruch 1, **dadurch gekennzeichnet,** daß der Katalysator (16) im Brennraum (3) der Verbrennungsanlage (1) eingebaut ist.

8. Verbrennungsanlage nach Anspruch 7, **dadurch gekennzeichnet,** daß die Eindüsvorrichtung (15) für das Reduktionsmittel im Brennraum (3) der Verbrennungsanlage (1) eingebaut ist.

9. Verbrennungsanlage nach Anspruch 1, **dadurch gekennzeichnet,** daß die Eindüsvorrichtung (29) für das Reduktionsmittel an die zur Verbrennungsanlage (1) führende Verbrennungsluftleitung (8) angeschlossen ist.

10. Verbrennungsanlage nach Anspruch 1, **dadurch gekennzeichnet,** daß der Katalysator (39) in der zum Kamin (32) führenden Rauchgasleitung (33) in Strömungsrichtung hinter einer die Rauchgase auf über 600 °C aufheizenden Wärmequelle (38) angeordnet ist.

11. Verbrennungsanlage nach Anspruch 10, **dadurch gekennzeichnet,** daß der Katalysator (39) in Strömungsrichtung hinter einen Titanoxid und/oder Vanadiumoxid enthaltenden Denox-Katalysator (37) eingebaut ist.

12. Verbrennungsanlage nach Anspruch 10, **dadurch gekennzeichnet,** daß die Wärmequelle (38) ein Wärmetauscher ist.

13. Verbrennungsanlage nach Anspruch 11, **dadurch gekennzeichnet,** daß die Wärmequelle eine kleine Verbrennungsanlage ist.

14. Verbrennungsanlage nach Anspruch 1 oder 10, **dadurch gekennzeichnet,** daß der Sauerstoffgehalt der dem Katalysator (39) zuströmenden Rauchgase in Abhängigkeit von der Katalysatortemperatur gegenläufig zur Katalysatortemperatur geregelt wird.

15. Verbrennungsanlage nach Anspruch 14, **dadurch gekennzeichnet,** daß Luft in die Rauchgase eingedüst wird.

16. Verbrennungsanlage nach Anspruch 9, **dadurch gekennzeichnet,** daß die Flammtemperatur der Verbrennungsanlage (1) 800 °C nicht überschreitet.

17. Verbrennungsanlage nach Anspruch 16, **gekennzeichnet** durch eine Wirbelschicht-Verbrennungsanlage (1).

18. Verbrennungsanlage nach Anspruch 1, **dadurch gekennzeichnet,** daß der Katalysator (16,39) nicht über 1300 °C erwärmt wird.

19. Verbrennungsanlage nach Anspruch 1, **dadurch gekennzeichnet,** daß als Reduktionsmittel Ammoniak verwendet ist.

20. Verbrennungsanlage nach Anspruch 1, **dadurch gekennzeichnet,** daß als Reduktionsmittel Kohlenmonoxid verwendet ist.

21. Verbrennungsanlage nach Anspruch 1,
**dadurch gekennzeichnet,**
daß als Reduktionsmittel Wasserstoff verwendet ist.

FIG 1

FIG 2

0 264 647

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 167 747 (AQUA-CHEM)<br>* Figuren 2,4; Patentansprüche 1-9;<br>Seite 4, Zeile 8 – Seite 11, Zeile 29 *<br>---<br> | 1-4,6,7<br>,15,18,<br>20,21 | B 01 D 53/36 |
| A | US-A-4 160 805 (HIDEYA INABA)<br>----- | | |

RECHERCHIERTE SACHGEBIETE (Int. Cl.4)

B 01 D 53/00

Der vorliegende Recherchenbericht wurde für alle Patentansprüche erstellt

| Recherchenort | Abschlußdatum der Recherche | Prüfer |
|---|---|---|
| DEN HAAG | 08-01-1988 | BOGAERTS M.L.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)